# EUROPÄISCHE PATENTSCHRIFT

(11) **EP 2 448 078 B1**
(45) Veröffentlichungstag und Bekanntmachung des Hinweises auf die Patenterteilung: **30.09.2020**
(21) Anmeldenummer: 11184339.7
(22) Anmeldetag: 07.10.2011
(51) Int. Cl.: H02M 5/458, H02M 7/487

(54) **Elektrische Schaltung zur Umwandlung elektrischer Energie zwischen einem dreiphasigen Stromnetz und einem einphasigen Stromnetz**
Electrical circuit for converting electrical energy between a tri-phase power network and a single-phase power network
Commutation électrique pour la conversion d'énergie électrique entre un réseau électrique triphasé et un réseau électrique monophasé

(30) Priorität: 29.10.2010 DE 102010043176
(43) Veröffentlichungstag der Anmeldung: 02.05.2012
(73) Patentinhaber: GE Energy Power Conversion GmbH, 12277 Berlin (DE)
(72) Erfinder: Janning, Jörg, 12559 Berlin (DE); Brandt, Alex, 16761 Henningsdorf (DE)
(74) Vertreter: Serjeants LLP

(56) Entgegenhaltungen:
- EP-A1- 0 874 448
- EP-A2- 2 194 638
- WO-A1-97/22174
- DE-A1- 10 042 938
- DE-A1- 19 941 170
- JP-A- H0 487 569

## Beschreibung

Die Erfindung betrifft eine elektrische Schaltung zur Umwandlung elektrischer Energie zwischen einem dreiphasigen Stromnetz und einem einphasigen Stromnetz.

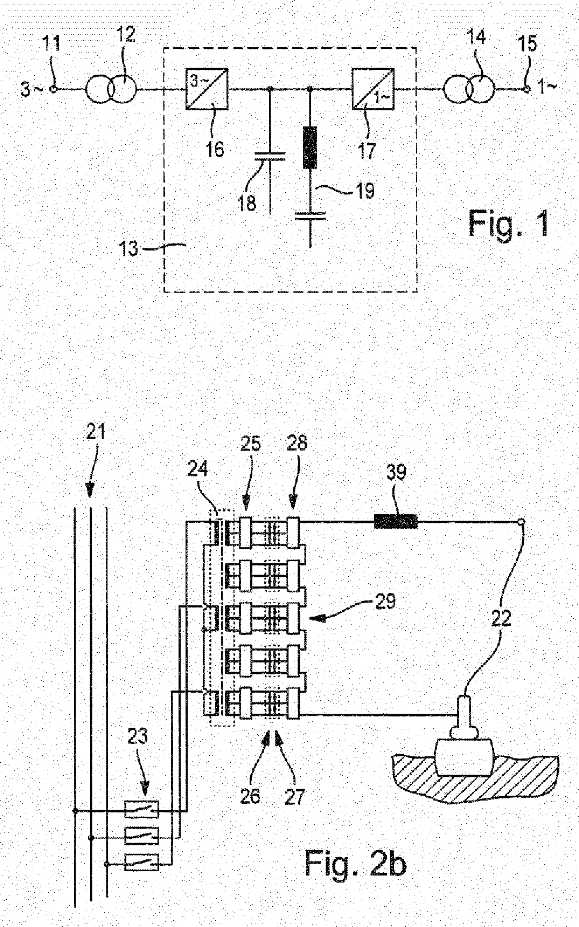

Eine derartige elektrische Schaltung ist in der Figur 1 in allgemeiner Form dargestellt. Dort ist ein dreiphasiges Stromnetz 11 über einen Transformator 12 mit einem Umrichter 13 verbunden, an den seinerseits über einen weiteren Transformator 14 ein einphasiges Stromnetz 15 angeschlossen ist. Der Umrichter 13 ist aus Teilumrichtern 16, 17 aufgebaut, an die ein Gleichspannungszwischenkreis 18 sowie ein Saugkreis 19 angeschlossen sind. Der Saugkreis 19 ist üblicherweise auf die doppelte Nennfrequenz des einphasigen Stromnetzes 15 abgestimmt und nimmt die pulsierende Leistung des einphasigen Stromnetzes 15 auf. Wird auf den Saugkreis 19 verzichtet, so muss der Gleichspannungszwischenkreis 18 die pulsierende Leistung aufnehmen und hierfür entsprechend ausgelegt sein.

Eine Ausführungsform einer derartigen elektrischen Schaltung ist in der Veröffentlichung "Neue Bahnstromumrichter für die DB in Lehrte und Aschaffenburg", Elektrische Bahnen, Heft 4+5/2009 beschrieben. Dort handelt es sich bei dem dreiphasigen Stromnetz um das öffentliche 50 Hz, 110 kV Drehstromnetz und bei dem einphasigen Stromnetz um das 16,7 Hz, 110 kV Bahnstromnetz. Der Saugkreis weist in diesem Fall eine Frequenz von 33,4 Hertz auf. Auf der Bahn-Seite sind vier Teilumrichter vorgesehen, die jeweils mit einer Wicklung des zugehörigen Bahn-Transformators verbunden sind. Die Ausgangsspannungen der Teilumrichter werden damit in dem Bahn-Transformator aufsummiert.

DE 100 42 938 beschreibt einen Motorantrieb. Der Motorantrieb hat einen mehrphasigen Leistungstransformator mit mindestens einem Primärwicklungskreis, der mit einer mehrphasigen Wechselstromquelle gekoppelt ist, und einer Anzahl von Sekundärwicklungskreisen, die jeweiligen Leistungszellen zugeordnet sind. Eine Modulationssteuerungs- und / oder -regelungsvorrichtung ist mit den Leistungszellen gekoppelt, um Harmonische in den Eingangsleitungen von der Leistungsquelle und in den Ausgangsleitungen zum Lastmotor zu verhindern.

Aufgabe der Erfindung ist es, eine elektrische Schaltung zu schaffen, die insbesondere auf der Seite des einphasigen Stromnetzes einen geringeren Aufwand erfordert.

Die Erfindung löst diese Aufgabe durch eine elektrische Schaltung nach dem Anspruch 1.

Bei einer vorteilhaften Weiterbildung der Erfindung weisen die ersten Teilumrichter jeweils drei und die zweiten Teilumrichterjeweils zwei Phasenmodule auf, die vorzugsweise jeweils als 3-Level-NPC-Stromrichter ausgebildet sind (NPC = neutral point clamped).

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

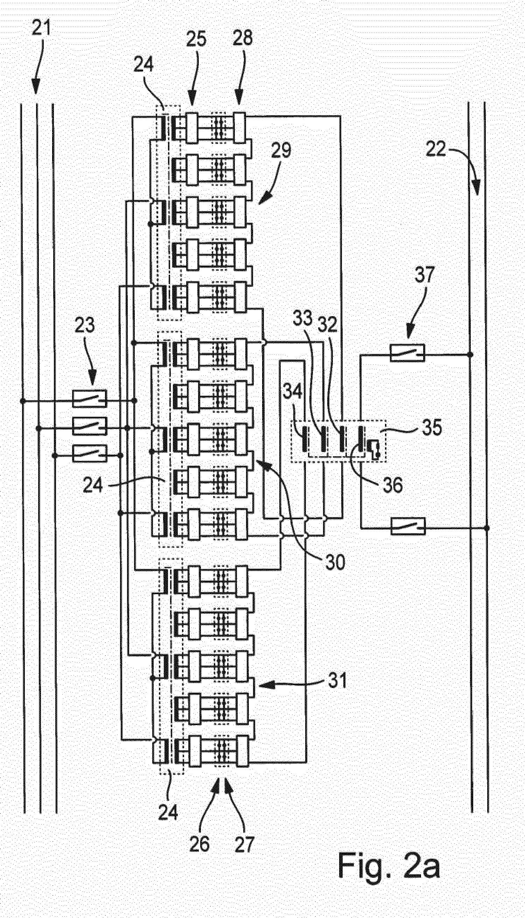

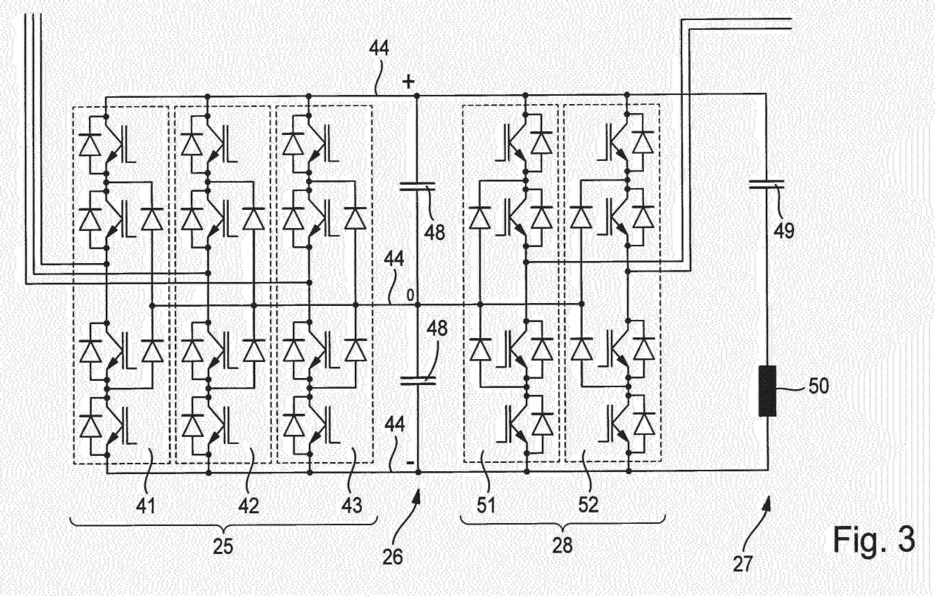

Wie bereits beschrieben, zeigt die Figur 1 eine elektrische Schaltung zur Umwandlung elektrischer Energie zwischen einem dreiphasigen Stromnetz und einem einphasigen Stromnetz in allgemeiner Form, die Figur 2a zeigt ein Ausführungsform einer erfindungsgemäßen elektrischen Schaltungen zur Umwandlung elektrischer Energie zwischen einem dreiphasigen Stromnetz und einem einphasigen Stromnetz, und die Figur 3 zeigt ein Ausführungsbeispiel einer erfindungsgemäßen elektrischen Schaltung für die Umrichter der Figur 2a. Figur 2b zeigt eine elektrische Schaltung zur Umwandlung elektrischer Energie zwischen einem dreiphasigen Stromnetz und einem einphasigen Stromnetz; diese Schaltung darstellt keine Ausführungsform der Erfindung.

In der Figur 2a ist eine elektrische Schaltung gezeigt, in der auf der linken Seite ein dreiphasiges Stromnetz 21, beispielsweise das dreiphasige öffentliche Drehstromnetz mit 50 Hz, 110 kV vorhanden ist, und in der auf der rechten Seite ein einphasiges Stromnetz 22, beispielsweise das einphasige Bahnstromnetz mit 16,7 Hz, 110 kV vorhanden ist.

Jede Phase des dreiphasigen Stromnetzes 21 ist über einen Schalter 23 mit jeweils einer Wicklung der Primärseite von drei ersten Transformatoren 24 verbunden. Die drei Wicklungen der Primärseite jedes ersten Transformators 24 sind dabei sternförmig miteinander verbunden. Auf der Sekundärseite weist jeder der drei ersten Transformatoren 24 fünf Wicklungen auf, über die jeder erste Transformator 24 an fünf erste Teilumrichter 25 angeschlossen ist. Insgesamt sind den Sekundärseiten der drei ersten Transformatoren 24 somit fünfzehn erste Teilumrichter 25 zugeordnet.

Es versteht sich, dass die Anzahl von sekundärseitigen Wicklungen und zugehörigen ersten Teilumrichtern 25 pro erstem Transformator 24 auch kleiner oder größer als fünf sein kein. Entsprechend kann sich auch die Anzahl der insgesamt vorhandenen ersten Teilumrichter 25 verändern.

Weiterhin versteht es sich, dass die drei ersten Transformatoren 24 auch mit einer anderen Anzahl von Transformatoren realisiert sein können.

Weiterhin ist es auch möglich, dass die drei ersten Transformatoren schaltungstechnisch andersartig ausgebildet sind. Beispielsweise ist es möglich, dass die Wicklungen der ersten Transformatoren 24 anders aufgebaut und verschaltet sind, beispielsweise in einer Dreieckschaltung oder dergleichen.

Jeder der ersten Teilumrichter 25 ist über einen Gleichstromzwischenkreis 26 und einen Saugkreis 27 mit einem zugehörigen zweiten Teilumrichter 28 verbunden. Es sind somit insgesamt fünfzehn zweite Teilumrichter 28 vorhanden, wobei immer fünf zweite Teilumrichter 28 insoweit zusammengehören, als sie einem gemeinsamen ersten Transformator 24 zugeordnet sind.

Im vorliegenden Ausführungsbeispiel sind die wechselstromseitigen Ausgänge von jeweils fünf zusammengehörigen zweiten Teilumrichtern 28 in Reihe geschaltet. Dies ergibt drei Reihenschaltungen 29, 30, 31 von jeweils fünf zweiten Teilumrichtern 28.

Jede der drei Reihenschaltungen 29, 30, 31 ist mit einer sekundärseitigen Wicklung 32, 33, 34 eines zweiten Transformators 35 verbunden. Auf der Primärseite des zweiten Transformators 35 ist eine einzige Wicklung 36 vorhanden, die über Schalter 37 mit dem einphasigen Stromnetz 22 verbunden ist.

Es wird darauf hingewiesen, dass die Reihenschaltungen 29, 30, 31 auch andersartig aufgebaut sein können. So ist es möglich, dass beispielsweise nur insgesamt zwölf zweite Teilumrichter 28 und nur zwei Wicklungen des zweiten Transformators 35 vorhanden sind, und dass eine erste Reihenschaltung von den wechselstromseitigen Ausgängen von den ersten sechs zweiten Teilumrichtern 28 und eine zweite Reihenschaltung von den zweiten sechs Teilumrichtern 28 gebildet wird. In diesem Fall haben die Reihenschaltungen somit keinen unmittelbaren Bezug mehr zu den zusammengehörigen ersten bzw. zweiten Teilumrichtern 25, 28, sondern stattdessen sind die Reihenschaltungen über die von den zusammengehörigen ersten bzw. zweiten Teilumrichtern 25, 28 vorgegebenen "Grenzen" hinweg zusammengesetzt.

In der Figur 2b ist eine elektrische Schaltung einer nicht beanspruchten Ausführungsform gezeigt, die zumindest teilweise mit der elektrischen Schaltung der Figur 2a übereinstimmt. Die Bauteile der elektrischen Schaltung der Figur 2b sind deshalb teilweise mit denselben Bezugszeichen wie in der Figur 2a gekennzeichnet. Insoweit wird auf die zugehörigen Erläuterungen zu der Figur 2a verwiesen. Die in Figur 2b gezeigte elektrische Schaltung ist keine Ausführungsform der Erfindung.

Bei der elektrischen Schaltung der Figur 2b ist nur ein einziger erster Transformator 24 vorhanden, an den die ersten Teilumrichter 25, der Gleichstromzwischenkreis 26, der Saugkreis 27 und die zweiten Teilumrichter 28 angeschlossen sind. Die Anzahl der ersten bzw. zweiten Teilumrichter 24, 28 kann dabei auch kleiner oder größer als fünf sein. Die wechselstromseitigen Ausgänge der zweiten Teilumrichter 28 bilden die Reihenschaltung 29.

Der noch freie Ausgang des ersten (in der Figur 2b : obersten) der zweiten Teilumrichter 28 ist über eine Längsdrossel 39 mit dem einphasigen Stromnetz 22 verbunden, insbesondere mit einem Fahrdraht des Bahnstromnetzes. Der noch freie Ausgang des letzten (in der Figur 2b : untersten) der zweiten Teilumrichter 28 ist ebenfalls mit dem einphasigen Stromnetz 22 verbunden, insbesondere mit den geerdeten Schienen des Bahnstromnetzes.

Es wird darauf hingewiesen, dass es anstelle der Längsdrossel 39 auch möglich ist, in die Reihenschaltung 29, also insbesondere zwischen die jeweils zusammengeschalteten wechselstromseitigen Ausgänge der zweiten Teilumrichter 28, jeweils kleine Längsdrosseln zwischenzuschalten, die zusammen dann den Wert der Längsdrossel 39 ergeben. Es versteht sich, dass auch Kombinationen hiervon möglich sind.

Weiterhin ist es möglich, dass zusätzlich zu der/den Längsdrossel/n eine oder mehrere Filterschaltungen vorgesehen sind.

Im Unterschied zu der Figur 2a ist bei der elektrischen Schaltung der Figur 2b somit kein zweiter Transformator 35 vorhanden. Stattdessen ist die Reihenschaltung 29 der zweiten Teilumrichter 28 über die Längsdrossel 39 direkt mit dem einphasigen Stromnetz 22 verbunden, insbesondere mit dem Fahrdraht und den Schienen des Bahnstromnetzes.

Die Ausgestaltung eines einzelnen Teilumrichters 25 zusammen mit dem zugehörigen Gleichspannungszwischenkreis 26 und Saugkreis 27 sowie dem zugehörigen zweiten Teilumrichter 28 ist in der Figur 3 gezeigt.

In der Figur 3 weist der erste Teilumrichter 25 drei Phasenmodule 41, 42, 43 auf, die wechselstromseitig mit der zugehörigen sekundärseitigen Wicklung des ersten Transformators 24 verbunden sind. Bei jedem der drei Phasenmodule 41, 42, 43 handelt es sich um einen 3-Level-NPC-Stromrichter (NPC = neutral point clamped). Der Aufbau der Phasenmodule 41, 42, 43 entspricht dem üblichen Aufbau derartiger 3-Level-NPC-Stromrichter.

Alternativ ist es möglich, dass anstelle der im vorliegenden Ausführungsbeispiel gezeigten 3-Level-NPC-Stromrichter auch andere elektrische Schaltungen vorhanden sind, beispielsweise 2-Level-Stromrichter oder sonstige Ausgestaltungen von Gleichspannungszwischenkreisumrichtern. Weiterhin ist es möglich, dass die Phasenmodule zum Zwecke der Erhöhung des Ausgangsstroms aus mehreren, gegebenenfalls über Ausgangsdrosseln parallel geschalteten Phasenmodulen bestehen.

Der erste Teilumrichter 25 weist gleichstromseitig drei Anschlusspunkte für drei Gleichspannungsniveaus auf. Die Anschlusspunkte sind in der Figur 3 in der Form von drei Gleichspannungsschienen 44 ausgebildet. Auf den drei Gleichspannungsschienen 44 sind dabei ein positives Gleichspannungsniveau "+", ein neutrales Gleichspannungsniveau "0" und ein negatives Gleichspannungsniveau "-" vorhanden.

Der Gleichspannungszwischenkreis 26 ist mit Hilfe von zwei beispielhaft dargestellten Kondensatoren 48 realisiert. Es versteht sich, dass der Gleichspannungszwischenkreis 26 auch eine Mehrzahl von Kondensatoren 48 aufweisen kann. Die Kondensatoren 48 sind zwischen dem positiven und dem neutralen Gleichspannungsniveau einerseits und dem neutralen und dem negativen Gleichspannungsniveau andererseits angeordnet.

Gegebenenfalls kann der Gleichspannungszwischenkreis 26 zusätzlich ein oder mehrere Filterkreise enthalten, die zur Aufnahme von Oberschwingungen aus den Netzen vorgesehen sind.

Der Saugkreis 27 ist mittels einer Reihenschaltung eines Kondensators 49 und einer Spule 50 realisiert. Die Reihenschaltung ist dabei zwischen das positive und das negative Gleichspannungsniveau geschaltet. Der Saugkreis 27 dient der Kompensation der pulsierenden Leistung des einphasigen Stromnetzes 22, insbesondere des Bahnstromnetzes. Der Saugkreis 27 stellt eine Ausgestaltung des Gleichspannungszwischenkreises 26 dar und kann auch entfallen, wenn die Kondensatoren 48 ausreichend bemessen sind.

Der zweite Teilumrichter 28 weist zwei Phasenmodule 51, 52 auf, bei denen es sich jeweils um einen 3-Level-NPC-Stromrichter (NPC = neutral point clamped) handelt. Der Aufbau der Phasenmodule 51, 52 entspricht dem üblichen Aufbau derartiger 3-Level-NPC-Stromrichter. Anstelle der 3-Level-NPC Stromrichter können alternativ auch wieder andere elektrische Schaltungen zum Einsatz kommen.

Gleichstromseitig sind die zwei Phasenmodule 51, 52 mit den Gleichspannungsschienen 44 verbunden. Wechselstromseitig sind die beiden Phasenmodule 51, 52 an die zugehörige Reihenschaltung 29, 30, 31 angeschlossen.

Die Spannung des dreiphasigen Stromnetzes 21 liegt auf der Primärseite von jedem der drei ersten Transformatoren 24 an. Sekundärseitig ergibt sich für jeden der drei ersten Transformatoren 24 eine transformierte Spannung, die an die fünf jeweils zugehörigen, ersten Teilumrichter 25 weitergegeben wird.

Jeder dieser fünf ersten Teilumrichter 25 beaufschlagt die Gleichspannungsschienen 44 und damit die zugehörigen zweiten Teilumrichter 28. Jeder der zweiten Teilumrichter 28 erzeugt mit Hilfe der jeweils zwei vorhandenen, als Brücke geschalteten Phasenmodule 51, 52 insgesamt fünf Gleichspannungsniveaus. Die Gleichspannungsniveaus der einzelnen Teilumrichter 28 sind dabei unterschiedlich.

Durch die Reihenschaltungen 29, 30, 31 der zweiten Teilumrichter 28 ergeben sich daraus jeweils insgesamt einundzwanzig Gleichspannungsniveaus. An jeder der Reihenschaltungen 29, 30, 31 kann somit mittels der genannten Gleichspannungsniveaus eine weitgehend beliebige Ausgangsspannung erzeugt werden, gegebenenfalls auch eine Gleichspannung.

Im Ausführungsbeispiel der Figur 2a kann mit den einundzwanzig Gleichspannungsniveaus eine einphasige Spannung erzeugt und dann über die jeweils zugehörigen Wicklungen 32, 33, 34 des zweiten Transformators 35 an das einphasige Stromnetz 22 weitergegeben werden.

Im Ausführungsbeispiel der Figur 2b kann mit den genannten Gleichspannungsniveaus ebenfalls eine erwünschte einphasige Spannung erzeugt und direkt in das einphasige Stromnetz 22 eingespeist werden.

In umgekehrter Richtung wird die einphasige Wechselspannung des einphasigen Stromnetzes 22 von dem zweiten Transformator 35 transformiert und von jeweils fünf zusammengehörigen zweiten Teilumrichtern 28 umgesetzt. Mit Hilfe der zugehörigen ersten Teilumrichter 25 und den jeweiligen ersten Transformatoren 24 wird daraus dann die Wechselspannung des dreiphasigen Stromnetzes 21 erzeugt.

Ergänzend wird darauf hingewiesen, dass in einer nicht beanspruchten Ausführungsform der zweite Transformator 35 der Figur 2a primärseitig auch mit drei Wicklungen realisiert sein kann. An diese drei Wicklungen kann dann ein dreiphasiges Stromnetz angeschlossen werden. In diesem Fall dient die beschriebene elektrische Schaltung zur Umwandlung elektrischer Energie zwischen einem ersten dreiphasigen Stromnetz, beispielsweise einem Drehstromnetz mit 110 kV und 50 Hz, und einem zweiten dreiphasigen Stromnetz, beispielsweise einem Drehstromnetz mit ebenfalls 110 kV, aber 16,7 Hz.

## Patentansprüche

1. Elektrische Schaltung zur Umwandlung elektrischer Energie zwischen einem dreiphasigen Stromnetz (21) und einem einphasigen Stromnetz (22), mit:
einer Vielzahl von ersten Transformatoren (24), wobei jeder erste Transformator (24) drei primärseitigen Wicklungen und mehreren sekundärseitigen Wicklungen umfasst, wobei jede primärseitige Wicklung mit einer jeweiligen Phase des dreiphasigen Stromnetzes verbindbar ist,
einer Vielzahl von ersten Teilumrichtern (25), wobei jeder erste Teilumrichter (25) mit einer entsprechenden sekundärseitigen Wicklung verbunden ist und wobei die ersten Teilumrichter (25) jeweils drei Phasenmodule (41, 42, 43) aufweisen,
einer Vielzahl von Gleichspannungszwischenkreisen (26), wobei jeder Gleichspannungszwischenkreis (26) mit einem entsprechenden ersten Teilumrichter (25) verbunden ist, und
einer Vielzahl von zweiten Teilumrichtern (28), wobei jeder zweite Teilumrichter (28) mit einem entsprechenden Gleichspannungszwischenkreis (26) verbunden ist,
wobei die zweiten Teilumrichter (28) eines jeden ersten Transformators (24) an ihren wechselstromseitigen Ausgängen über mehrere Reihenschaltungen (29, 30, 31) in Reihe miteinander verbunden sind;
wobei die Elektrische Schaltung ferner einen zweiten Transformator (35) und Schalter (37) umfasst, und jede der Reihenschaltungen (29, 30, 31) mit einer jeweiligen sekundärseitigen Wicklung (32, 33, 34) des zweiten Transformators (35) verbunden ist und auf der Primärseite des zweiten Transformators (35) eine einzige Wicklung (36) vorhanden ist, die über die Schalter (37) mit dem einphasigen Stromnetz (22) verbindbar ist.

2. Elektrische Schaltung nach Anspruch 1, wobei für jeden ersten Transformators (24) fünf erste Teilumrichter (25) mit fünf zugehörigen Gleichspannungszwischenkreisen (26) und fünf zugehörigen zweiten Teilumrichtern (28) vorhanden sind.

3. Elektrische Schaltung nach einem der Ansprüche 1 oder 2, wobei drei erste Transformatoren (24) vorhanden sind.

4. Elektrische Schaltung nach einem der vorstehenden Ansprüche, wobei die drei Phasenmodule (41, 42, 43) als 3-Level-NPC-Stromrichter ausgebildet sind (NPC = neutral point clamped).

5. Elektrische Schaltung nach einem der vorstehenden Ansprüche, wobei die zweiten Teilumrichter (28) jeweils zwei Phasenmodule (51, 52) aufweisen.

6. Elektrische Schaltung nach Anspruch 5, wobei die zwei Phasenmodule (51, 52) als 3-Level-NPC-Stromrichter ausgebildet sind (NPC = neutral point clamped).

7. Elektrische Schaltung nach Anspruch 5 und 6, wobei die Phasenmodule (51, 52) aus mehreren, über Ausgangsdrosseln parallel geschalteten Phasenmodulen bestehen.

8. Elektrische Schaltung nach einem der vorstehenden Ansprüche, wobei ein aus einem Kondensator (49) und einer Spule (50) bestehender Saugkreis (27) vorhanden ist.

## Claims

1. Electrical circuit for converting electrical energy between a three-phase electricity network (21) and a single-phase electricity network (22), with:
a multiplicity of first transformers (24), each first transformer (24) comprising three primary-side windings and a multiplicity of secondary-side windings, each primary-side winding being connectable to a respective phase of the three-phase power system,
a multiplicity of first partial converters (25), each first partial converter (25) being connected to a corresponding secondary-side winding, and wherein the first partial converters (25) each have three phase modules (41, 42, 43),
a multiplicity of DC intermediate circuits (26), each DC intermediate circuit (26) being connected to a corresponding first partial converter (25), and
a multiplicity of second partial converters (28), each second partial converter (28) being connected to a corresponding DC intermediate circuit (26),
wherein the second partial converters (28) of each first transformer (24) are connected in series with one another at their alternating current side outputs via several series circuits (29, 30, 31);
- said electric circuit further comprising a second transformer (35) and switches (37), each of said series circuits (29, 30, 31) being connected to a respective secondary-side winding (32, 33, 34) of said second transformer (35), and a single winding (36) being present on the primary side of said second transformer (35), said single winding (36) being connectable to said single-phase power system (22) via said switches (37).

2. Electrical circuit according to claim 1, wherein for each first transformer (24) there are five first partial converters (25) with five associated DC intermediate circuits (26) and five associated second partial converters (28).

3. An electrical circuit according to one of claims 1 or 2, wherein three first transformers (24) are provided.

4. Electrical circuit according to one of the above claims, wherein the three phase modules (41, 42, 43) are designed as 3-level NPC (neutral point clamped) power converters.

5. Electrical circuit according to one of the above claims, wherein the second partial converters (28) each have two phase modules (51, 52).

6. An electrical circuit according to claim 5, wherein the two-phase modules (51, 52) are designed as 3-level NPC power converters (NPC = neutral point clamped).

7. An electrical circuit according to Claims 5 and 6, wherein the phase modules (51, 52) consist of several phase modules connected in parallel via output chokes.

8. An electric circuit according to any one of the above claims, wherein an absorption circuit (27) consisting of a capacitor (49) and a coil (50) is provided.

## Revendications

1. Circuit électrique pour la conversion d'énergie électrique entre un réseau électrique triphasé (21) et un réseau électrique monophasé (22), avec :
une pluralité de premiers transformateurs (24), selon lequel chaque premier transformateur (24) comprend trois enroulements du côté primaire et plusieurs enroulements du côté secondaire, selon lequel chaque enroulement du côté primaire est connectable à une phase respective du réseau électrique triphasé,
une pluralité de premiers convertisseurs partiels (25), selon lequel chaque premier convertisseur partiel (25) est connecté à un enroulement correspondant du côté secondaire et selon lequel les premiers convertisseurs partiels (25) présentent respectivement trois modules de phase (41, 42, 43),
une pluralité de circuits intermédiaires de tension continue (26), selon lequel chaque circuit intermédiaire de tension continue (26) est connecté à un premier convertisseur partiel (25) correspondant, et
une pluralité de seconds convertisseurs partiels (28), selon lequel chaque second convertisseur partiel (28) est connecté à un circuit intermédiaire de tension continue (26) correspondant,
selon lequel les seconds convertisseurs partiels (28) de chaque premier transformateur (24) sont connectés les uns aux autres en série à leurs sorties du côté du courant alternatif par l'intermédiaire de plusieurs circuits en série (29, 30, 31) ;
selon lequel le circuit électrique comprend en outre un deuxième transformateur (35) et un deuxième commutateur (37), et chacun des circuits en série (29, 30, 31) est connecté à un enroulement respectif (32, 33, 34) du côté secondaire du deuxième transformateur (35), et, du côté primaire du deuxième transformateur (35) est présent un enroulement unique (36) qui est connectable au réseau électrique monophasé (22) par l'intermédiaire du circuit (37).

2. Circuit électrique selon la revendication 1, selon lequel pour chaque premier transformateur (24), cinq premiers convertisseurs partiels (25) avec cinq circuits intermédiaires de tension continue (26) associés et cinq seconds convertisseurs partiels (28) associés sont présents.

3. Circuit électrique selon l'une des revendications 1 ou 2, selon lequel trois premiers transformateurs (24) sont présents.

4. Circuit électrique selon l'une des revendications précédentes, selon lequel les trois modules de phase (41, 42, 43) sont configurés comme des convertisseurs de courant 3-level-NPC (NPC = neutral point clamped).

5. Circuit électrique selon l'une des revendications précédentes, selon lequel les deux convertisseurs partiels (28) présentent respectivement deux modules de phase (51, 52).

6. Circuit électrique selon la revendication 5, selon lequel les deux modules de phase (51, 52) sont configurés comme des convertisseurs de courant 3-level-NPC (NPC = neutral point clamped).

7. Circuit électrique selon les revendications 5 et 6, selon lequel les modules de phase (51, 52) consistent en plusieurs modules de phase montés en parallèle par l'intermédiaire d'inductances de sortie.

8. Circuit électrique selon l'une des revendications précédentes, selon lequel un circuit de filtrage (27) consistant en un condensateur (49) et une self (50) est présent.
